# EUROPÄISCHE PATENTSCHRIFT

(11) **EP 1 758 271 B1**
(45) Veröffentlichungstag und Bekanntmachung des Hinweises auf die Patenterteilung: **09.12.2009**
(21) Anmeldenummer: 06026227.6
(22) Anmeldetag: 25.10.2004
(51) Int. Cl.: H04B 7/185

(54) **Anordnung und Verfahren zur Verwendung eines Mobiltelefons an Bord eines Luftfahrzeugs**
Device and method for use of a mobile telephone on board an aircraft
Appareil et méthode permettant l'utilisation d'un téléphone mobile à bord d'un avion

(30) Priorität: 23.10.2003 EP 03024455
(43) Veröffentlichungstag der Anmeldung: 28.02.2007
(62) Teilanmeldung aus: 04790827.2
(73) Patentinhaber: Lufthansa Technik AG, 22335 Hamburg (DE)
(72) Erfinder: Starke, Henry, 25747 Ellerbek (DE); Muirhead, Andrew, 22848 Norderstedt (DE)
(74) Vertreter: Keussen, Christof

(56) Entgegenhaltungen:
- EP-A- 1 096 699
- EP-A1- 1 041 737
- US-A1- 2002 160 773
- US-A1- 2003 084 130
- US-A1- 2003 128 671

## Beschreibung

Die Erfindung betrifft eine Anordnung sowie ein Verfahren zur Verbindung eines an Bord eines Luft-, Land-, Wasser- oder Raumfahrzeugs befindlichen Mobiltelefons mit einem stationären Mobilfunknetz.

Die Verwendung von Mobiltelefonen an Bord von Flugzeugen ist gegenwärtig nicht möglich. Zum einen werden Wechselwirkungen mit den elektronischen Bordsystemen befürchtet, zum anderen sind insbesondere bei Langstreckenflügen über unbewohnte Gebiete oder Wasser keine Mobilfunknetze verfügbar, in die ein Mobiltelefon sich einbuchen könnte.

Gegenwärtig sind die Flugzeuge vieler Airlines mit proprietären Kommunikationssystemen ausgerüstet, die den Passagieren Sprach- und/oder Datenkommunikation während des Fluges erlauben. Diese Systeme sind in der Regel teuer in der Anschaffung, da sämtliche Sitze (oder zumindest Sitzreihen) mit entsprechenden Endgeräten ausgestattet werden müssen. Ferner fallen hohe Verbindungskosten an.

EP 1 096 699 A2 offenbart eine Möglichkeit, mit der innerhalb eines Flugzeugs benutzte Mobilendgeräte mit einem terrestrischen Mobilfunknetz in Kontakt treten können. Dazu wird innerhalb des Flugzeugs ein lokales W-LAN-Funknetz aufgebaut. Für den Gebrauch in Flugzeugen werden mobile Endgeräte vorgeschlagen, die sowohl den W-LAN als auch den GSM-Standard umfassen und bei den die GSM-Bestandteile während des Fluges abgeschaltet werden.

Der Erfindung liegt die Aufgabe zugrunde, eine Anordnung und ein Verfahren der eingangs genannten Art zu schaffen, die eine einfache Kommunikation von Insassen eines Fahrzeugs mit externen Personen, Computern oder dergleichen ermöglichen.

Die Erfindung löst diese Aufgabe durch eine Anordnung, die aufweist:
- an Bord eines Fahrzeugs:
   a) wenigstens eine Mobilfunk-Basisstation ,
   b) eine Einrichtung zum Konvertieren der Mobilfunk-Daten in das IP-Protokoll und umgekehrt,
   c) eine Einrichtung zum Senden/Empfangen von IP-Daten an eine/von einer Bodenstation,
- stationär:
   d) eine Einrichtung zum Senden/Empfangen von IP-Daten an eine/von einer entsprechenden Einrichtung des Fahrzeugs,
   e) eine Einrichtung zum Konvertieren der IP-Daten in Mobilfunk-Daten und umgekehrt,
   f) eine Einrichtung zum Senden/Empfangen der Mobilfunk-Daten an das/von dem stationären Mobilfunknetz.

Das erfindungsgemäße Verfahren weist folgende Schritte auf, wobei hier stationär eine Einrichtung (7) zum Senden/Empfangen der Mobilfunk-Daten an das/von dem stationären Mobilfunknetz wenigstens ein GSM-Gateway aufweist, das gegenüber dem stationären Mobilfunknetz (8) das an Bord des Fahrzeugs befindliche Mobiltelefon simuliert, vorgesehen ist:
aa) Einloggen des Mobiltelefons in eine lokale Mobilfunkzelle, die von einer an Bord des Fahrzeugs angeordneten Mobilfunk-Basisstation gebildet wird;
bb) Konvertieren der Mobilfunk-Daten in das IP-Protokoll und umgekehrt;
cc) Senden/Empfangen der IP-Daten an eine/von einer Bodenstation;
ee) Konvertieren der IP-Daten in Mobilfunk-Daten und umgekehrt;
ff) Senden/Empfangen der Mobilfunk-Daten an das/von dem stationären Mobilfunknetz.

Zunächst seien einige im Rahmen der Erfindung verwendete Begriffe erläutert. Die Erfindung ist für Fahrzeuge aller Art verwendbar. Besonders bevorzugt kann sie bei Luft- oder Wasserfahrzeugen verwendet werden, die sich auch außerhalb der Reichweite stationärer Mobilfunknetze aufhalten. Sie kann auch für Landfahrzeuge wie beispielsweise Eisenbahnen verwendet werden, die durch dünn besiedelte und daher von den Mobilfunknetzen schlecht abgedeckte Gebiete fahren und/oder bei denen Probleme aufgrund Faraday'scher Abschirmung des Fahrzeuginneren auftreten. Raumfahrzeuge sind Fahrzeuge, die sich außerhalb der Erdatmosphäre bewegen.

Stationäre Mobilfunknetze sind die üblichen landgestützten Mobilfunknetze, bei denen eine große Zahl stationärer Basisstationen Mobilfunkzellen bildet. Es kann sich um GSM-, UMTS- oder Mobilfunknetze nach anderen üblichen Standards handeln. Bevorzugt handelt es sich um digitale Mobilfunknetze, bei denen die Mobilfunk-Daten in digitaler Form übermittelt werden.

Erfindungsgemäß ist an Bord des Fahrzeugs eine (oder gegebenenfalls mehrere) Mobilfunk-Basisstationen angeordnet. Diese bildet im Fahrzeuginneren eine lokale Mobilfunkzelle, in die sich Mobiltelefone der Fahrzeuginsassen einbuchen können. Die Kapazität der Basisstation, d. h. die Zahl der maximal einbuchbaren Mobiltelefone, wird an die erwartete Zahl von gleichzeitig telefonierenden oder datenübertragenden Fahrzeuginsassen angepasst. Da beispielsweise in Flugzeugen die Mobilfunk-Basisstation mit der zugehörigen Antenne in unmittelbarer Nähe der Passagiere und ihrer Mobiltelefone angeordnet ist, können die Mobiltelefone mit sehr geringer Leistung senden, so dass Wechselwirkungen mit der übrigen Bordelektronik minimiert sind. Gegebenenfalls kann die übrige Bordelektronik zusätzlich abgeschirmt werden.

Erfindungsgemäß werden die von der Basisstation empfangenen Mobilfunk-Daten in das IP-Protokoll konvertiert. Das IP-Protokoll ist das dem Fachmann geläufige Datenprotokoll des Internets.

Diese IP-Daten werden dann von einer entsprechenden Einrichtung zu einer Bodenstation gesendet. Es kann sich um eine über beispielsweise Satelliten vermittelte Verbindung mit einer Bodenstation handeln. Ein besonderer Vorteil liegt darin, dass Funkverbindungen zur Übermittlung von IP-Daten in Flugzeugen bereits vorhanden bzw. in der Installation begriffen sind. Diese IP-Verbindungen dienen zum einen der Kommunikation der Bordsysteme mit beispielsweise Überwachungseinrichtungen am Boden und ermöglichen zum anderen den Passagieren eines Flugzeugs den Internetzugang an Bord. Ein entsprechendes System zur Herstellung einer IP-Verbindung zwischen Flugzeug und Boden wird beispielsweise von der Firma Boeing unter der Bezeichnung Connexion angeboten.

Die Erfindung kann daher diese sowieso vorhandene bzw. aus anderen Gründen zu installierende IP-Datenverbindung zwischen Flugzeug und Bodenstation zur kostengünstigen Übertragung auch von Mobilfunk-Daten im IP-Format nutzen.

In einer Bodenstation werden die IP-Daten wieder in Mobilfunk-Daten (beispielsweise GSM- oder UMTS-Daten) rückkonvertiert. Zum "Filtern" der entsprechenden Daten aus den gesamten IP-Daten können im Stand der Technik bekannte und dem Fachmann geläufige IP call manager verwendet werden, die für die Internet-IP-Telefonie bereits in Verwendung sind.

Die rückkonvertierten Mobilfunk-Daten werden dann von einer entsprechenden Einrichtung der Bodenstation in das stationäre Mobilfunknetz eingespeist. Zu diesem Zweck kann entweder eine Leitungsverbindung mit dem Betreiber des Mobilfunknetzes bestehen, jedoch können auch einfach entsprechende Mobilfunkstationen verwendet werden, die für das Mobilfunknetz das an Bord des Fahrzeugs befindliche Mobiltelefon gewissermaßen simulieren. Entsprechende sogenannte Mobilfunk Gateways sind kommerziell erhältlich. Für das GSM-Netz gibt es GSM Gateways, die auf einer wählbaren Zahl von Kanälen Verbindungen mit lokalen stationären Mobilfunknetzen herstellen können.

Die Erfindung erlaubt es, dass der Insasse eines Fahrzeugs an Bord so telefoniert, als befände er sich am Boden im Bereich des entsprechenden Mobilfunknetzes. Für ihn fallen nur die Mobilfunk-Verbindungskosten an, die auch am Boden entstehen würden. Ist die Bodenstation im Bodenbereich des Heimatnetzes des Fahrzeuginsassen angeordnet, so kann er zu den geringen Kosten telefonieren, die bei einem solchen Telefonat im Heimatnetz anfallen. Zusätzlich können Kosten für die IP-Verbindung anfallen, die aber in der Regel von den Fluggesellschaften als einmalige Pauschale für die Nutzung der IP-Verbindung erhoben werden, unabhängig, zu welchem Zweck dies geschieht (Mobiltelefonieren, Nutzung des bordseitig zur Verfügung gestellten Internetzugangs oder dergleichen). Es können erfindungsgemäß mehrere Bodenstationen im Bereich der Mobilfunknetze verschiedener Länder vorgesehen sein. Da sich an Bord eines Flugzeugs in der Regel Passagiere aus verschiedenen Ländern aufhalten, kann sich so jeder Passagier über ein entsprechendes Gateway und die erfindungsgemäße Verbindung in sein Heimatnetz bzw. das jeweils kostengünstigste Mobilfunknetz einbuchen.

Die bodenseitige Sende-/Empfangsstation für die IP-Daten einerseits sowie die Einrichtungen zum Konvertieren der IP-Daten in Mobilfunk-Daten und Mobilfunk-Gate Ways andererseits können räumlich voneinander getrennt und beispielsweise über das Internet miteinander verbunden sein. Eine einzige bodenseitige Sende-/Empfangsstation für IP-Daten kann daher auch mit räumlich voneinander getrennten und beispielsweise im Bereich verschiedener stationärer Mobilfunknetze befindliche Einrichtungen zum Konvertieren in Mobilfunk-Daten sowie Mobilfunk-Gateways verbunden sein.

An Bord des Fahrzeugs wird bevorzugt eine Mobilfunk-Picozelle gebildet. Es handelt sich um eine sehr kleinräumige Zelle, die Basisstation benötigt dementsprechend nur eine sehr geringe Sendeleistung. An Bord größerer Fahrzeuge, beispielsweise großer Flugzeuge oder Schiffe können gegebenenfalls mehrere Mobilfunk-Picozellen gebildet werden.

Die Verbindung zwischen der bordseitigen Mobilfunk-Basisstation und der bordseitigen Sende-/Empfangsstation für IP-Daten kann über das Intranet des Fahrzeugs erfolgen. Da bei Flugzeugen in der Regel ein Intranet sowie eine IP-Datensende-/Empfangsstation sowieso vorhanden bzw. in der Nachrüstung begriffen ist, erfordert eine Nachrüstung mit dem erfindungsgemäßen System bordseitig somit nur noch die Mobilfunk-Basisstation sowie die Einrichtung zum Konvertieren der Mobilfunk-Daten in das IP-Protokoll und umgekehrt.

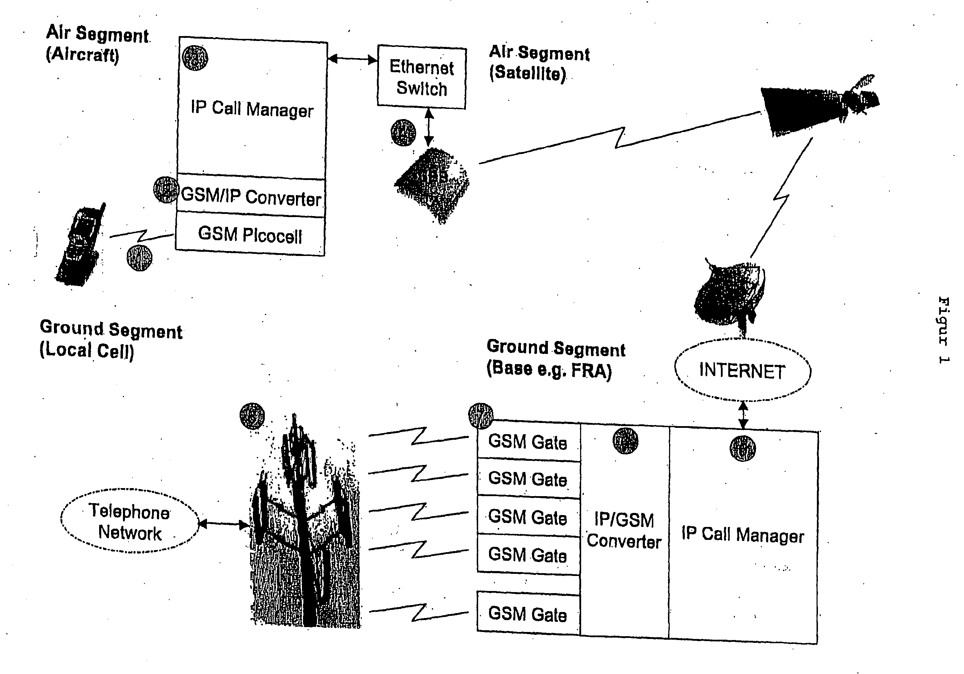

Die Erfindung wird im folgenden anhand der Zeichnung erläutert, die schematisch eine erfindungsgemäße Anordnung zeigt.

An Bord eines Flugzeuges ist eine GSM-Basisstation 1 angeordnet, die eine GSM-Picozelle bildet. Die Basisstation 1 ist über das bordseitige Intranet mit einem GSM-/IP-Converter 2 verbunden, der die GSM-Daten in IP-Daten umsetzt und umgekehrt. Ein IP call manager 3 speist die IP-Telefoniedaten in das Intranet bzw. Ethernet des Flugzeugs ein bzw. entnimmt dem Netz die entsprechenden empfangenen IP-Telefoniedaten. Über eine bei 4 angedeutete bordseitige Antenne erfolgt über einen Satelliten die Verbindung mit einer Bodenstation. Die Sende-/Empfangsstation am Boden ist über das Internet mit einem IP call manager 5 verbunden, der die entsprechenden IP-Daten aus dem Internet gewissermaßen filtert und über einen IP/GSM-Converter 6 wieder in GSM-Daten umsetzt. An den IP-/ GSM-Converter 6 sind GSM Gateways 7 angeschlossen, die die Verbindung zum stationären Mobilfunknetz 8 herstellen. Der geschilderte Ablauf ist entsprechend umgekehrt für GSM-Daten, die aus dem stationären Mobilfunknetz 8 zu einem Mobiltelefon an Bord des Flugzeuges geschickt werden.

## Patentansprüche

1. Anordnung zur Verbindung eines an Bord eines Luft-, Land-, Wasser- oder Raumfahrzeugs befindlichen Mobiltelefons mit einem stationären Mobilfunknetz (8), die aufweist:
- stationär:
a) eine Einrichtung zum Senden/Empfangen von IP-Daten an eine/von einer entsprechenden Einrichtung des Fahrzeugs,
b) eine Einrichtung (6) zum Konvertieren der IP-Daten in Mobilfunk-Daten und umgekehrt,
c) eine Einrichtung (7) zum Senden/Empfangen der Mobilfunk-Daten an das/von dem stationären Mobilfunknetz, wobei die Einrichtung (7) wenigstens ein GSM-Gateway aufweist, das gegenüber dem stationären Mobilfunknetz (8) das an Bord des Fahrzeugs befindliche Mobiltelefon simuliert;
- an Bord des Fahrzeugs:
d) eine Einrichtung (4) zum Senden/Empfangen von IP-Daten an eine/von einer Bodenstation,
e) wenigstens eine Mobilfunk-Basisstation (1),
f) eine Einrichtung (2) zum Konvertieren der Mobilfunk-Daten in das IP-Protokoll und umgekehrt.

2. Anordnung nach Anspruch 1, **dadurch gekennzeichnet, dass** die Mobilfunk-Basisstation (1) an Bord des Fahrzeugs eine Mobilfunk-Picozelle bildet.

3. Anordnung nach Anspruch 1 oder 2, **dadurch gekennzeichnet, dass** die Verbindung zwischen der Einrichtung (4) zum Senden/Empfangen von IP-Daten an eine/von einer Bodenstation und der Einrichtung (2) zum Konvertieren der Mobilfunk-Daten in das IP-Protokoll und umgekehrt über das Intranet des Fahrzeugs erfolgt.

4. Anordnung nach einem der Ansprüche 1 bis 3, **dadurch gekennzeichnet, dass** die Einrichtung (6) zum Konvertieren der IP-Daten in Mobilfunk-Daten und umgekehrt einen IP call manager (5) aufweist.

5. Anordnung nach einem der Ansprüche 1 bis 4, **dadurch gekennzeichnet, dass** die Einrichtung (7) zum Senden/Empfangen der Mobilfunk-Daten an das/von dem stationären Mobilfunknetz zum Senden/Empfangen über eine oder mehrere Vermittlungsstationen ausgebildet ist.

6. Anordnung nach Anspruch 5, **dadurch gekennzeichnet, dass** die Vermittlungsstationen Satelliten umfassen.

7. Anordnung nach einem der Ansprüche 1 bis 6, **dadurch gekennzeichnet, dass** die Einrichtung (4) zum Senden/Empfangen von IP-Daten an eine/von einer Bodenstation zum Senden/Empfangen über ein oder mehrere Vermittlungsstationen ausgebildet ist.

8. Anordnung nach Anspruch 7, **dadurch gekennzeichnet, dass** die Vermittlungsstationen Satelliten umfassen.

9. Anordnung nach einem der Ansprüche 1 bis 8, **dadurch gekennzeichnet, dass** die Verbindung zwischen der Einrichtung zum Senden/Empfangen von IP-Daten an eine/von einer entsprechenden Einrichtung des Fahrzeugs und der Einrichtung (6) zum Konvertieren der IP-Daten in Mobilfunk-Daten und umgekehrt über das Internet erfolgt.

10. Anordnung nach einem der Ansprüche 1 bis 9, **dadurch gekennzeichnet, dass** die Einrichtung (2) zum Konvertieren der Mobilfunk-Daten in das IP-Protokoll und umgekehrt einen IP call manager (3) aufweist.

11. Anordnung nach einem der Ansprüche 1 bis 11, **dadurch gekennzeichnet, dass** sie mehrere Einrichtungen (6) zum Konvertieren der IP-Daten in Mobilfunk-Daten und umgekehrt und Einrichtungen (2) zum Konvertieren der Mobilfunk-Daten in das IP-Protokoll und umgekehrt aufweist, die räumlich voneinander beabstandet im Bereich verschiedener stationärer Mobilfunknetze (8) angeordnet sind.

12. Verfahren zum Verbinden eines an Bord eines Luft-, Land-, Wasser- oder Raumfahrzeugs befindlichen Mobiltelefons mit einem stationären Mobilfunknetz (8), wobei eine stationär vorgesehene Einrichtung (7) zum Senden/Empfangen der Mobilfunk-Daten an das/von dem stationären Mobilfunknetz wenigstens ein GSM-Gateway aufweist, das gegenüber dem stationären Mobilfunknetz (8) das an Bord des Fahrzeugs befindliche Mobiltelefon simuliert, mit den Schritten:
aa) Einloggen des Mobiltelefons in eine lokale Mobilfunkzelle, die von einer an Bord des Fahrzeugs angeordneten Mobilfunk-Basisstation (1) gebildet wird;
bb) Konvertieren der Mobilfunk-Daten in das IP-Protokoll und umgekehrt;
cc) Senden/Empfangen der IP-Daten an eine/von einer Bodenstation;
ee) Konvertieren der IP-Daten in Mobilfunk-Daten und umgekehrt;
ff) Senden/Empfangen der Mobilfunk-Daten an das/von dem stationären Mobilfunknetz.

## Claims

1. An arrangement for linking a mobile telephone situated on board an aircraft, land vehicle, water craft or spacecraft to a stationary mobile-radio network (8), which has:
- stationary:
a) a device for sending/receiving IP data to/from a corresponding device of the vehicle,
b) a device (6) for converting the IP data into mobile-radio data and vice versa,
c) a device (7) for sending/receiving the mobile-radio data to/from the stationary mobile-radio network, wherein the device (7) has at least one GSM gateway which in relation to the stationary mobile-radio network (8) simulates the mobile telephone situated on board the vehicle:
- on board the vehicle
d) a device (4) for sending/receiving IP data to/from a ground station,
e) at least one mobile-radio base station (1),
f) a device (2) for converting the mobile-radio data into the IP protocol and vice versa.

2. An arrangement according to Claim 1, **characterised in that** the mobile-radio base station (1) on board the vehicle forms a mobile-radio picocell.

3. An arrangement according to Claim 1 or 2, **characterised in that** the link between the device (4) for sending/receiving IP data to/from a ground station and the device (2) for converting the mobile-radio data into the IP protocol and vice versa is effected via the internet of the vehicle.

4. An arrangement according to any one of Claims 1 to 3, **characterised in that** the device (6) for converting the IP data into mobile-radio data and vice versa has an IP call manager (5).

5. An arrangement according to any one of Claims 1 to 4, **characterised in that** the device (7) for sending/receiving the mobile-radio data to/from the stationary mobile-radio network is configured to send/receive via one or more switching stations.

6. An arrangement according to Claim 5, **characterised in that** the switching stations comprise satellites.

7. An arrangement according to any one of Claims 1 to 6, **characterised in that** the device (4) for sending/receiving IP data to/from a ground station is configured to send/receive via one or more switching stations.

8. An arrangement according to Claim 7, **characterised in that** the switching stations comprise satellites.

9. An arrangement according to any one of Claims 1 to 8, **characterised in that** the link between the device for sending/receiving IP data to/from a corresponding device of the vehicle and the device (6) for converting the IP data into mobile-radio data and vice versa is effected via the internet.

10. An arrangement according to any one of Claims 1 to 9, **characterised in that** the device (2) for converting the mobile-radio data into the IP protocol and vice versa has an IP call manager (3).

11. An arrangement according to any one of Claims 1 to 10, **characterised in that** it has a plurality of devices (6) for converting the IP data into mobile-radio data and vice versa, and devices (2) for converting the mobile-radio data into the IP protocol and vice versa, which devices are disposed spatially spaced apart from one another in the vicinity of different stationary mobile-radio networks (8).

12. A method of linking a mobile telephone situated on board an aircraft, land vehicle, water craft or spacecraft to a stationary mobile-radio network (8), wherein a stationarily arranged device (7) for sending/receiving the mobile-radio data to/from the stationary mobile-radio network has at least one GSM gateway which in relation to the stationary mobile-radio network (8) simulates the mobile telephone situated on board the vehicle, with the steps of:
aa) logging the mobile telephone on to a local mobile-radio cell which is formed by a mobile-radio base station (1) disposed on board the vehicle;
bb) converting the mobile-radio data into the IP protocol and vice versa;
cc) sending/receiving the IP data to/from a ground station;
ee) converting the IP data into mobile-radio data and vice versa;
ff) sending/receiving the mobile-radio data to/from the stationary mobile-radio network.

## Revendications

1. Dispositif de liaison d'un téléphone mobile situé à bord d'un véhicule terrestre, marin ou spatial à un réseau stationnaire de téléphones mobiles (8) qui présente :
- stationnaire :
a) un dispositif pour émettre/recevoir des données IP à un ou d'un dispositif correspondant du véhicule,
b) un dispositif (6) pour convertir les données IP en données de téléphone mobile et inversement,
c) un dispositif (7) pour émettre/recevoir des données de téléphone mobile au ou du réseau stationnaire de téléphones mobiles, le dispositif (7) présentant au moins un point d'accès GSM qui simule le téléphone mobile à bord du véhicule pour le réseau stationnaire de téléphones mobiles (8) ;
- à bord du véhicule :
d) un dispositif (4) pour émettre ou recevoir des données IP à une ou d'une station au sol,
e) au moins une station de téléphone mobile de base (1),
f) un dispositif (2) pour convertir les données de téléphone mobile dans le protocole IP et inversement.

2. Dispositif selon la revendication 1, **caractérisé en ce que** la station de téléphone mobile de base (1) forme une pico cellule de téléphone mobile à bord du véhicule.

3. Dispositif selon la revendication 1 ou 2, **caractérisé en ce que** la liaison entre le dispositif (4) pour émettre ou recevoir des données IP à une ou d'une station au sol et le dispositif (2) pour convertir les données de téléphone mobile dans le protocole IP et inversement s'effectue par l'intranet du véhicule.

4. Dispositif selon l'une des revendications 1 à 3, **caractérisé en ce que** le dispositif (6) pour convertir les données IP en données de téléphone mobile et inversement présente un gestionnaire de connexions IP.

5. Dispositif selon l'une des revendications 1 à 4, **caractérisé en ce que** le dispositif (7) pour émettre/recevoir des données de téléphone mobile au ou du réseau stationnaire de téléphones mobiles est configuré pour émettre/recevoir par l'intermédiaire d'une ou plusieurs stations relais.

6. Dispositif selon la revendication 5, **caractérisé en ce que** les stations relais comprennent plusieurs satellites.

7. Dispositif selon l'une des revendications 1 à 6, **caractérisé en ce que** le dispositif (4) pour émettre ou recevoir des données IP à une ou d'une station au sol est configuré pour émettre/recevoir par l'intermédiaire d'une ou plusieurs stations relais.

8. Dispositif selon la revendication 7, **caractérisé en ce que** les stations relais comprennent plusieurs satellites.

9. Dispositif selon l'une des revendications 1 à 8, **caractérisé en ce que** la liaison entre le dispositif pour émettre ou recevoir des données IP à une ou d'une installation correspondante du véhicule et le dispositif (6) pour convertir les données IP en données de téléphone mobile et inversement se fait par internet.

10. Dispositif selon l'une des revendications 1 à 9, **caractérisé en ce que** le dispositif (2) pour convertir les données de téléphone mobile dans le protocole IP et inversement présente un gestionnaire de connexions IP.

11. Dispositif selon l'une des revendications 1 à 11, **caractérisé en ce qu'**il présente plusieurs dispositifs (6) pour convertir les données IP en données de téléphone mobile et inversement et dispositifs (2) pour convertir les données de téléphone mobile dans le protocole IP et inversement, qui sont disposés, espacés les un des autres, dans la zone de différents réseaux stationnaires de téléphones mobiles (8).

12. Procédé de liaison d'un téléphone mobile situé à bord d'un véhicule terrestre, marin ou spatial à un réseau stationnaire de téléphones mobiles (8), un dispositif (7) prévu, pour émettre/recevoir des données de téléphone mobile au ou du réseau stationnaire de téléphones mobiles, présente au moins un point d'accès GSM qui simule le téléphone mobile à bord du véhicule pour le réseau stationnaire de téléphones mobiles (8) comprenant les étapes suivantes :
aa) ouvrir une session du téléphone mobile dans une cellule de téléphone mobile locale qui est formée par une station de base de téléphone mobile (1) à bord du véhicule ;
bb) convertir le données de téléphone mobile dans le protocole IP et réciproquement ;
cc) émettre/recevoir les données IP sur ou d'une station au sol ;
ee) convertir les données IP en données de téléphone mobile et réciproquement ;
ff) émettre/recevoir les données de téléphone mobile vers le ou du réseau stationnaire de téléphone mobile.
